# EUROPÄISCHE PATENTANMELDUNG

(11) **EP 1 406 085 A1**
(43) Veröffentlichungstag der Anmeldung: **07.04.2004**
(21) Anmeldenummer: 02405845.5
(22) Anmeldetag: 01.10.2002
(51) Int. Cl.: G01N 27/30, G01N 27/403

(54) **Elektrode, Elektroden-Element sowie Verfahren zu deren Herstellung und Verwendung der Elektrode**

(71) Anmelder: METROHM AG, 9100 Herisau (CH)
(72) Erfinder: Zähner, Paul, 9100 Herisau (CH)
(74) Vertreter: Hepp, Dieter

(57) **Zusammenfassung**

Eine Elektrode (1) mit einem Elektrodenträger (2), mit einer leitfähigen Schicht (3), einer Elektrodenoberfläche (4), wobei die Schicht aus leitfähigen Partikeln eine Zusammensetzung enthaltend leitfähige Partikel und Bindemittel aufweist, zeichnet sich durch eine Elektrodenoberfläche (4) mit einer durch einen Bruchvorgang entstandenen Oberflächenstruktur aus. Das Verfahren zur Herstellung einer Elektrode (1) umfassend die Schritte: Bereitstellen eines Elektrodenträgers (2); Bereitstellen eines Abdeckelements (5); Zusammenfügen des Abdeckelements (5) und des Elektrodenträgers (2); Perforieren des erzeugten Laminats; Aufbringen einer leitfähigen Zusammensetzung, enthaltend ein Bindemittel und leitfähige Partikel, vorzugsweise einer Paste/Tinte auf und/oder in die erzeugte Perforation (9) sowie das Entfernen des Abdeckelements (5), wodurch durch das Brechen der leitfähigen Schicht eine frische Elektrodenoberfläche gebildet wird.

## Beschreibung

Die Erfindung betrifft eine Elektrode sowie ein Elektroden-Element, ein Herstellungsverfahren für eine Elektrode bzw. ein Elektroden-Element sowie die Verwendung einer erfindungsgemässen Elektrode für die voltammetrische, amperometrische und potentiometrische Analytik.

Ein analytischer Nachweis von unterschiedlichen Stoffen, wie beispielsweise der Nachweis von Schwermetallionen in Trinkwasser, lässt sich mit elektrochemischen Methoden durchführen. Eine für solche Nachweise eingesetzte elektrochemische Methode ist die Voltammetrie. Sie basiert auf einer Stromstärke-Messung in Abhängigkeit einer sich verändernden Spannung.

Die Reaktion des zu analysierenden Stoffes an der Elektrode läuft unter einem gleichzeitig stattfindenden Massentransport im Bereich um die Elektrode ab. Es hat sich herausgestellt, dass die Diffusionskinetik einen nicht unerheblichen Faktor auf das Messergebnis bzw. auf die Messung selbst darstellen kann. Durch die Verwendung von Mikroelektroden mit ihren kleinen Oberflächen kann allerdings ein positiver Einfluss auf diese Diffusionskinetik in einem sphärischen Diffusionsfeld und damit auch auf den Ablauf der Analyse genommen werden.

Wenn eine Elektrode für eine Vielzahl von Messungen eingesetzt wird, ist es erforderlich, die Elektrode regelmässig zu reinigen, um Rückstände oder Verunreinigungen von vorhergehenden Messungen von der Elektrode zu entfernen. Dies kann beispielsweise bei Feststoffelektroden durch einen Poliervorgang der Elektrodenoberfläche erfolgen. Allerdings gelingt es nicht immer, die Elektrodenoberfläche trotz einer Reinigung frei von Rückständen zu bekommen. Es kann sich ein sogenannter Memory-Effekt einstellen, der im schlimmsten Fall eine Verfälschung des Messergebnisses bewirkt. Zudem ist der Aufwand für die Reinigung erheblich.

Zur Vermeidung derartiger Probleme wird bei Analysen auf Elektroden zurückgegriffen, die für den einmaligen Gebrauch konzipiert sind. Es wird damit sichergestellt, dass das Messergebnis nicht durch Einflüsse von zurückliegenden Messungen verfälscht wird. Die Elektrodenoberfläche einer solchen Elektrode für den Einmalgebrauch befindet sich in einem jungfräulichen Zustand.

Ein Verfahren zur Herstellung von Mikroelektroden wird in US 5,739,039 beschrieben. Mittels einer Laserbehandlung werden gezielt Bereiche einer elektrisch leitenden Schicht, die zuvor auf einen Träger aufgedruckt und mit einer elektrisch isolierenden Beschichtung überdeckt wird, freigelegt. Bei dieser Behandlung tritt aber eine Beeinträchtigung bzw. Veränderung an der elektrisch leitenden Elektrodenoberfläche auf.

Die Aufgabe der vorliegenden Erfindung ist die Nachteile des Bekannten zu vermeiden und eine alternative Elektrode und ein alternatives Verfahren zur Herstellung einer Elektrode bereitzustellen. Ebenfalls ist es eine Aufgabe der vorliegenden Erfindung, ein Elektroden-Element sowie ein Verfahren zur Herstellung dieses Elektroden-Elements bereitzustellen.

Die Aufgabe wird durch eine Elektrode und durch ein Elektroden-Element sowie durch ein Verfahren zur Herstellung einer Elektrode bzw. eines Elektroden-Elements gemäss den Merkmalen der unabhängigen Ansprüchen gelöst.

Eine erfindungsgemässe Elektrode umfasst einen Elektrodenträger mit einer leitfähigen Schicht zur Bildung einer Elektrodenoberfläche, wobei die Schicht eine Zusammensetzung enthaltend leitfähige Partikel und Bindemittel umfasst. Die Elektrode zeichnet sich dadurch aus, dass die Elektrodenoberfläche eine Oberflächenstruktur aufweist, die durch einen Bruchvorgang erzeugt wird. Als Elektrodenoberfläche im Rahmen der Erfindung ist diejenige Oberfläche zu verstehen, die für analytische Messungen eingesetzt wird.

Eine ebenfalls erfindungsgemässe Elektrode umfasst einen Elektrodenträger mit einer leitfähigen Schicht zur Bildung einer Elektrodenoberfläche, wobei die Schicht eine Zusammensetzung enthaltend leitfähige Partikel und Bindemittel umfasst. Die Elektrode zeichnet sich dahingehend aus, dass die Elektrodenfläche durch Bindemittel und aus dem Bindemittel vorstehende leitfähige Partikel gebildet wird und eine Rauhigkeit von der Grösse der leitfähigen Partikel aufweist. Die Partikel bilden dabei Mikroelektroden mit einer Partikelgrösse von 0.1 bis 10 µm.

Als Elektrodenträger können Polymer-Materialien eingesetzt werden, die eine ausreichende mechanische Stabilität aufweisen und elektrochemisch inert sind. Weiterhin muss das PolymerMaterial benetzbar, insbesondere bedruckbar sein, d.h. eine Druckfarbe, insbesondere eine Paste oder Tinte muss trocken gut anhaften. Geeignete Materialien für den Einsatz als Elektrodenträger sind beispielsweise Polyester wie Polyethylenterephthalat, Celluloseacetat. Weitere Polymer-Materialien mit den vorstehend beschriebenen Eigenschaften sind dem Fachmann bekannt.

Die leitfähige Schicht entsteht durch ein Aufbringen, bevorzugt durch einen Druckvorgang einer leitfähigen Zusammensetzung auf den Elektrodenträger und optional einem entsprechenden Trocknungs- bzw. Härtungsvorgang. Geeignete leitfähige Zusammensetzungen, insbesondere für die Druckanwendung sind dem Fachmann bekannt.

Eine durch einen Bruchvorgang erzeugte Oberflächenstruktur ist stark von den chemischen bzw. physikalischen Parametern der leitfähigen Schicht und dem Bruchvorgang abhängig und weist vorzugsweise keine spezifischen Orientierungen auf. Partikuläre Komponenten der leitfähigen Schicht bzw. der sie bildenden Zusammensetzung heben sich an der Elektrodenoberfläche gegenüber dem Bindemittel hervor und erzeugen eine grössere Oberfläche als im Vergleich zu einer Zusammensetzung ohne derartige Komponenten. Unter dem Begriff Bruchvorgang ist hierbei ein Prozess zu verstehen, bei dem ein Material den Druck-, Zugoder anderweitigen Belastungen nicht standhält und eine Auftrennung in zumindest zwei Stücke eintritt. Unter Bruchvorgang kann auch ein Reissen, Abscherren, Abspalten etc. verstanden werden. Dem Fachmann sind verschiedene Methoden oder Verfahren betreffend einen Bruchvorgang bekannt. Mittels dieses Bruchvorgangs kann eine neue, vorzugsweise weitestgehend reine und unverschmutzte Oberfläche erzeugt werden. Dies reduziert oder vermeidet Störeinflüsse bei Messungen mit der Elektrode. Ausserdem bildet sich dabei eine bruchrauhe Oberflächenstruktur aus der die leitfähigen Partikel herausragen und Mikro-Elektroden bilden.

Die Rauhigkeit der Elektrodenoberfläche ist als maximale Rauhtiefe zu verstehen und definiert sich als die maximale Profilhöhe über die Messlänge der Elektrodenoberfläche.

Die Partikelgrösse ergibt die Grösse der leitfähigen Partikel, ohne jedoch eine Festlegung über die Form der Partikel zu machen. Die angegebenen Werte sind deshalb als ein Mittelwert über die unterschiedlichsten geometrischen Partikelformen, d.h. deren Ausdehnungen zu verstehen.

In einer Ausführungsform umfasst die Elektrode weiter einen Elektrodenträger mit einer ersten und einer zweiten Oberfläche und zumindest eine auf der zweiten Oberfläche des Elektrodenträgers zugängliche, leitfähige Schicht, wobei der Elektrodenträger zumindest eine Perforation aufweist, welche von der leitfähigen Schicht durchdrungen wird.

Die erste und zweite Oberfläche des Elektronenträgers resultieren aus einer räumlichen Ausdehnung des Elektrodenträgers, wie sie beispielsweise bei einer Band- bzw. Folienform auftritt. Vorstellbar ist auch ein Elektrodenträger in Form eines einseitig offenen Formkörpers, z.B. eines Bechers, einer Kappe. Die Innen- und die Aussenseite dieses Formkörpers bilden dann die erste und die zweite Oberfläche. Dem Fachmann sind weitere Ausgestaltungsformen für Elektrodenträger bekannt.

Die Oberfläche der leitfähigen Schicht, welche sich auf der zweiten Oberfläche des Elektrodenträgers befindet, kann als Kontaktstelle herangezogen und mit einem Auswertegerät verbindbar ausgestaltet werden.

Unter dem Begriff Perforation ist gemäss der Erfindung eine Durchbrechung im Elektrodenträgermaterial zu verstehen. Die Form der Perforation ist nicht zwangsläufig festgelegt, sondern kann verschiedenste geometrische Formen annehmen. Beispielsweise kann die Perforation ein Loch mit kreisrundem, ovalem, polygonalem oder unregelmässigem Querschnitt oder ein linienartiges Loch sein. Das Profil der Perforation kann ebenfalls unterschiedlich gestaltet sein, beispielsweise zylindrisch, konisch etc. Die Perforation lässt sich durch verschiedenste Bearbeitungsmethoden herstellen. Bearbeitungsmethoden wie etwa Stechen, Ätzen, Schneiden mit Werkzeugen, Flüssigkeiten oder mit Laser sind dem Fachmann ebenfalls bekannt und im Rahmen der Erfindung nicht nur auf die genannten beschränkt.

Das Ausfüllen bzw. Durchdringen der Perforation erfolgt beim Auftragen der leitfähigen Zusammensetzung durch dem Fachmann bekannte Verfahren wie beispielsweise einem Druckprozess. Die leitfähige Zusammensetzung wird über die vorhandene Perforation des Elektrodenträgers aufgebracht.

Vorteilhafterweise ist die Elektrodenoberfläche vom Elektrodenträger umgeben. Damit sind keine zusätzlichen Verfahrensschritte zur Abgrenzung bzw. zur Isolierung der Elektrodenoberfläche gegenüber anderen leitenden Beschichtungen auf dem Elektrodenträger erforderlich. Auch ist die Elektrodenoberfläche damit klein ausführbar.

Vorzugsweise weist die erfindungsgemässe Elektrode eine leitfähige Schicht auf, wobei die leitfähige Zusammensetzung Kohlenstoff bzw. Kohlenstoff-Partikel und/oder Metall- bzw. metallischen Partikel enthält. Die Kohlenstoff- bzw. die metallischen Partikel treten bei einer mittels Bruchvorgang erzeugten Schichtoberfläche gegenüber dem Bindemittel der Schicht hervor und wirken so als lokalisierte Elektrodenspitzen bzw. Mikroelektroden auf der Elektrodenoberfläche. Derartige Elektrodenspitzen zeigen vorteilhafte Diffusionsphänomäne während des Messvorgangs.

Ein weiterer Aspekt einer erfindungsmässigen Elektrode ist eine Modifikation der durch den Materialbruch entstandenen Elektrodenoberfläche mittels chemischer und/oder physikalischer Behandlung. Durch die Modifikation kann die Elektrodenoberfläche an entsprechende Mess-Anforderungen selektiv angepasst werden. Beispielsweise kann durch die Beschichtung mit einer organischen oder anorganischen Substanz die Elektrode zur Messung von weiteren Ionen aktiviert werden. Entsprechende Behandlungsverfahren für die Herstellung modifizierter Elektroden sind dem Fachmann geläufig.

Die Dicke des Elektrodenträgers für eine erfindungsgemässe Elektrode beträgt vorteilhafterweise zwischen 20 und 200 µm.

Bevorzugt beträgt die Dicke zwischen 30 und 140 µm, und weiter bevorzugt zwischen 40 und 80 µm. Diese Dicke erlaubt die Erzeugung von Perforationen mit einem geeigneten Querschnitt. Bei Elektrodenträgern mit einer grösseren Dicke als der oben definierten hat sich gezeigt, dass die Perforation zu gross werden kann, was negative Auswirkungen auf die Benetzung zwischen Elektrodenoberfläche und der zu analysierenden Probenflüssigkeit haben kann.

Ebenfalls vorteilhaft ist eine Elektrode mit zumindest einer Perforation, wobei der Durchmesser einer solchen Perforation zwischen 10 und 400 µm beträgt. In einer bevorzugten Ausführungsform beträgt der Durchmesser zwischen 20 und 200 µm und weiter bevorzugt zwischen 40 und 100 µm. Ein solcher gewählter Durchmesser bewirkt ein ausreichendes Eindringen der leitfähigen Zusammensetzung in die Perforation während des Aufbringens auf den Elektrodenträger, resultierend auch durch die Kapillarwirkung der Perforation. Zwar ist es auch vorstellbar, durch die Verwendung eines Benetzungsmittels in der leitfähigen Zusammensetzung ein Eindringen in eine etwas kleinere Perforation zu erwirken, allerdings ist ein möglicherweise negativer Einfluss auf die spätere Analytik nicht auszuschliessen.

Ein weiterer Aspekt der Erfindung ist ein Elektroden-Element zur Herstellung einer erfindungsgemässen Elektrode. Das Elektroden-Element weist auf dem Elektrodenträger ein Abdeckelement auf, das derart mit der leitfähigen Schicht verbunden ist, dass beim Trennen von Elektrodenträger und Abdeckelement die leitfähige Schicht gebrochen wird.

Unter dem Begriff Elektroden-Element ist im Rahmen der Erfindung eine noch nicht einsatzfähige Elektrode zu verstehen, die erst durch einen Bearbeitungsschritt für eine Messung einsetzbar wird. Dieser Bearbeitungsschritt ist vorzugsweise so ausgestaltet, dass er durch den Benutzer selber ausgeführt werden kann und keine aufwendigen Anforderungen hinsichtlich technischer Ausstattung oder spezieller Ausbildung des Benutzers stellt. Bezogen auf die Erfindung muss der Anwender einzig das Abdeckelement vom Elektroden-Element entfernen. Dabei wird die leitfähige Schicht im Bereich der Grenzfläche zwischen dem Elektrodenträger und dem Abdeckelement gebrochen, so dass die Elektrodenoberfläche entsteht. Das Abdeckelement lässt sich unterschiedlich ausbilden und kann beispielsweise ein Stapel von aneinandergefügten Schichten sein. Die Schichten können sowohl aus demselben Material als auch aus unterschiedlichen Materialien bestehen. Weiterhin können diese Materialien eine unterschiedliche oder eine gleiche Schichtstärke aufweisen.

Eine Ausführungsform des Elektroden-Elements weist eine fluchtende Perforation des Elektrodenträgers und des Abdeckelements auf, die durch die leitfähige Schicht gefüllt ist. Unter dem Begriff fluchtend ist hierbei eine deckungsgleiche Überlagerung des Elektrodenträgers und des Abdeckelements bei Aufsicht auf eines der Elemente oder im gemeinsamen Profil zu verstehen.

Vorteilhafterweise umfasst das Abdeckelement eine klebefähige Materialschicht. Die klebefähige Materialschicht kann einseitig oder beidseitig, vorzugsweise einseitig mit einer klebeaktiven Substanz beschichtet sein. Vorzugsweise ist das Abdeckelement ein Klebefilm. Aufgrund der klebenden Eigenschaft ist ein einfaches Anbringen an den Elektrodenträger möglich. Ausserdem kann durch eine geeignete Auswahl der Klebeeigenschaft Einfluss auf das Entfernen des Abdeckelements genommen werden, das zur erfindungsgemässen Elektrode führt.

Eine weitere Form des Elektroden-Elements ist durch ein zweites Abdeckelement gekennzeichnet, welches als eine zusätzliche Schicht auf das erste Abdeckelement, d.h. den Klebefilm aufgebracht ist.

Dieses zweite Abdeckelement in Form einer Schicht aus einem benetzbaren Material, vorzugsweise Papier, ist damit nicht in direktem Kontakt mit dem Elektrodenträger. Neben Papier sind auch andere Materialien wie Kunststofffolien vorstellbar, die mit der leitfähigen Zusammensetzung benetzt werden können. Die Schicht dient als Art einseitiger Verschluss für eine Perforation des Elektrodenträgers und des Klebefilms. In die einseitig verschlossene Perforation kann die leitfähige Zusammensetzung eingebracht werden. Aufgrund der Benetzungsfähigkeit des verwendeten Materials kann die leitfähige Zusammensetzung vollständig in die Perforation eingebracht werden und es bleiben keine unbedeckten Oberflächen zurück. Die Benetzungsfähigkeit unterstützt das Einbringen der leitfähigen Zusammensetzung in die Perforation im Elektrodenträger bzw. im Abdeckelement.

Anstatt ein zweites Abdeckelement fest auf das erste Abdeckelement aufzubringen, ist es vorstellbar, die Perforation auf der Seite des Abdeckelements während des Aufbringens der leitfähigen Zusammensetzung vorübergehend zu verschliessen. Dies kann beispielweise durch die Unterlage erfolgen, auf der der Elektrodenträger während des Aufbringens der leitfähigen Zusammensetzung aufliegt. Die Oberfläche der Unterlage kann hierzu entsprechend modifiziert sein, um eine Benetzbarkeit sicherzustellen. Andere Arten des vorübergehenden Verschliessens sind dem Fachmann bekannt.

Die leitfähige Schicht kann wie zuvor ausgeführt Kohlenstoff und/oder Metalle, insbesondere Kohlenstoff-Partikel und/oder metallische Partikel enthalten.

Beim Elektroden-Element wird ebenfalls eine Dicke des Elektrodenträgers bzw. ein Durchmesser für die Perforation gewählt, wie dies bereits für die Elektrode ausgeführt wurde.

In einer bevorzugten Ausführungsform des Elektroden-Elements weist das Abdeckelement, eine Dicke auf, die zwischen 20 und 200 µm beträgt, bevorzugt zwischen 30 und 140 µm, und weiter bevorzugt zwischen 40 und 80 µm beträgt.

Die Dicke des Abdeckelements wirkt sich auf die Güte bzw. Grösse der Perforation aus und ist deshalb sorgfältig auszuwählen. Es gilt der Grundsatz, wie er bereits bei der Dicke des Elektrodenträgers diskutiert wurde, dass durch eine zu grosse Dicke die Perforationen zu gross werden und schlechtere Mess-Eigenschaften der Elektrode, die aus dem Elektroden-Element hergestellt wird, resultieren. Insbesondere ist bei einem Elektroden-Element die Gesamtdicke von Elektrodenträger und Abdeckelement so zu wählen, dass die zuvor diskutierte Problematik auch hier nicht auftritt.

In weiteren Ausführungsformen können die Elektrode bzw. das Elektroden-Element mehr als eine Perforation und/oder aufgebrachte, leitfähige Schichten aufweisen. Die jeweiligen, aufgebrachten leitfähigen Schichten können, müssen aber nicht miteinander verbunden sein. Damit können beispielsweise neben Arbeitselektroden auch Referenz- und/oder Hilfselektroden auf einer Messeinheit in Form eines Elektroden-Arrays platziert werden. Die einzelnen Arten von Elektroden können durch eine Modifikation, insbesondere chemische Modifikationen auf die gewünschten Anforderungen angepasst werden. Derartige Modifikationen können mit verschiedenen Methoden, beispielsweise nasschemisch ausgeführt werden. Weitere Methoden sind dem Fachmann bekannt.

Ein erfindungsgemässes Verfahren zur Herstellung eines Elektroden-Elements umfasst die Schritte:
a) Bereitstellen eines Elektrodenträgers;
b) Bereitstellen eines Abdeckelements;
c) Zusammenfügen des Abdeckelements und des Elektrodenträgers;
d) Perforieren des in Schritt c) erzeugten Laminats; und
e) Aufbringen einer leitfähigen Zusammensetzung, vorzugsweise einer Druckfarbe, enthaltend ein Bindemittel und leitfähige Partikel auf und/oder in die in Schritt d) erzeugte Perforation.

Ein erfindungsgemässes Verfahren zur Herstellung einer Elektrode umfasst die Schritte:
a) Bereitstellen eines Elektrodenträgers;
b) Bereitstellen eines Abdeckelements;
c) Zusammenfügen des Elektrodenträgers und des Abdeckelements;
d) Perforieren des in Schritt c) erzeugten Laminats;
e) Aufbringen einer leitfähigen Zusammensetzung, vorzugsweise einer Druckfarbe, enthaltend ein Bindemittel und leitfähige Partikel auf und/oder in die in Schritt d) erzeugte Perforation; und
f) Entfernen des Abdeckelements.

Unter einem Zusammenfügen wird im Sinne der Erfindung verstanden, dass der Elektrodenträger und das Abdeckelement mittels geeigneter Hilfsmittel wie beispielsweise Klebstoff vollflächig aneinander anliegen. Entsprechende Hilfsmittel sind dem Fachmann bekannt. Dieses vollflächige Aneinanderliegen ist insbesondere für die Perforation und das anschliessende Aufbringen der leitfähigen Zusammensetzung wichtig. Beim vollflächigen Kontakt der beiden Komponenten gelangt keine leitfähige Zusammensetzung in die Grenzfläche zwischen Elektrodenträger und Abdeckelement. Somit hat die nach Entfernen des Abdeckelements entstandene Elektrodenoberfläche weiterhin die gleiche Dimension wie die Perforation.

Als möglicher Zusatzschritt kann die Perforation vor dem Aufbringen der leitfähigen Zusammensetzung durch ein zweites Abdeckelement einseitig zu verschliessen. Dieses zweites Abdekkelement wird auf das klebefähige Abdeckelement, welches mit dem Elektrodenträger ein Laminat bildet, aufgebracht.

Die erforderlichen Eigenschaften oder Parameter zu Elektrodenträger, Abdeckelement, leitfähiger Schicht, zweitem Abdeckelement sind weiter oben angeführt.

Die Perforation lässt sich durch verschiedenste Bearbeitungsmethoden herstellen. Bearbeitungsmethoden wie etwa Stechen, Ätzen, Schneiden mit Werkzeugen, Flüssigkeiten oder mit Laser sind dem Fachmann ebenfalls bekannt und im Rahmen der Erfindung nicht nur auf die genannten beschränkt. Vorteilhaft ist es, wenn das Perforationsmittel einer Bewegung mit xyz-Kontrolle zugänglich ist. Damit sind sehr genaue Platzierungen und auch geringe Toleranzen bei den Perforationen möglich. Diese xyz-Kontrolle erlaubt es auch, eine Vielzahl von Elektrodenträgern schnell aufeinanderfolgend zu bearbeiten, sofern diese in einem definierten Raster angeordnet sind.

Ein weiterer Aspekt der Erfindung ist die Verwendung der erfindungsmässigen Elektrode in voltammetrischen Analysen.

Die Erfindung wird im folgenden anhand eines Beispiels und anhand der Figuren näher erläutert.

Es zeigen:
- Figur 1:: eine erfindungsmässige Elektrode im Querschnitt;
- Figur 2:: ein schematisches Herstellungsverfahren für ein Elektroden-Element;
- Figur 3:: die Herstellung einer Elektrode aus einem Elektroden-Element;
- Figur 4a:: eine weitere erfindungsmässige Elektrode;
- Figur 4b:: eine weiteres Elektroden-Element;
- Figur 5:: ein schematisches Herstellungsverfahren für eine in Figur 4a gezeigte Elektrode;
- Figur 6:: eine Aufsicht auf die Stirnfläche einer Elektrode;
- Figur 7:: eine schematische Messanordnung; und
- Figur 8:: eine Vorgehensweise bei einer Messung.

Die Figuren sind schematische Darstellungen und nicht massstäblich ausgeführt.

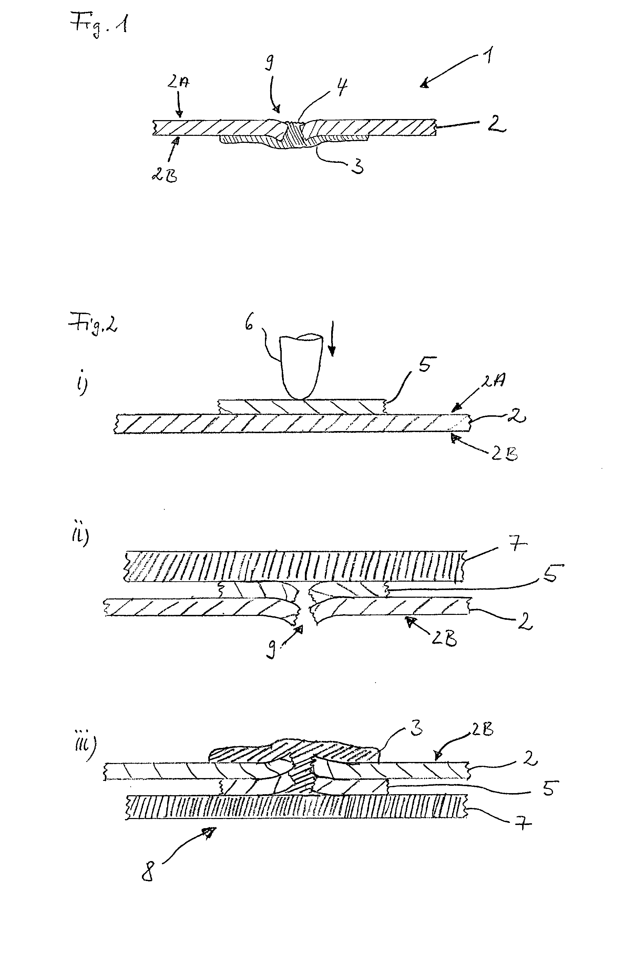

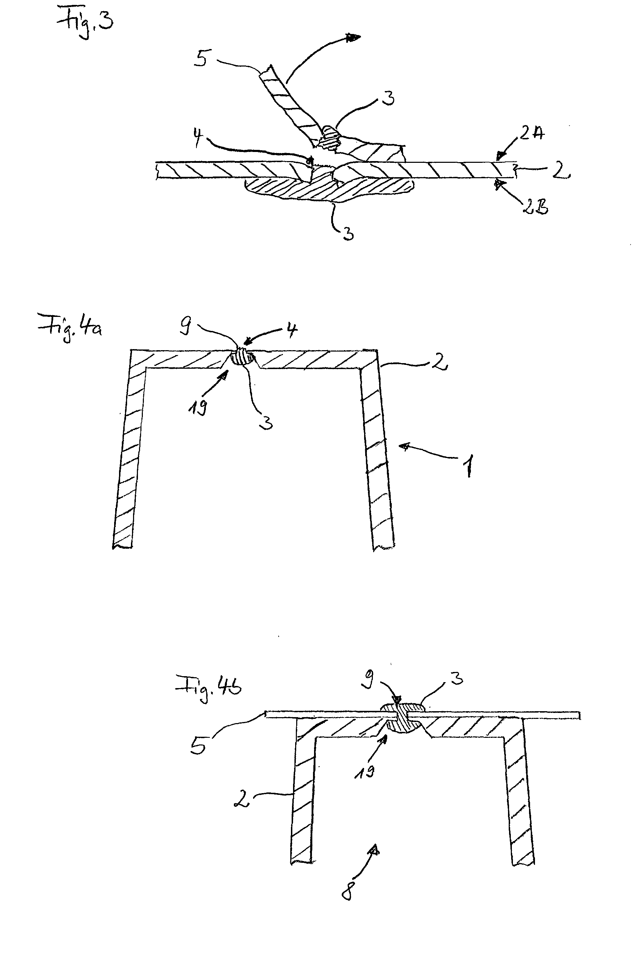

Die Figur 1 zeigt eine erfindungsgemässe Elektrode 1 mit einer Elektrodenoberfläche 4, die durch einen Bruchvorgang erzeugt wird. Die Elektrode 1 umfasst einen Elektrodenträger 2 mit einer ersten Oberfläche 2A und einer zweiten Oberfläche 2B. Als Elektrodenträger 2 wird ein Polyester (ICI) oder Celluloseacetat-Ester (3M, Fa. Folex, CH) mit einer Dicke von 50 µm eingesetzt. Die Perforation 9 weist einen Durchmesser von ungefähr 0.2 mm auf. Die leitfähige Schicht 3 wird durch Aufdrucken einer leitfähigen, kohlenstoffhaltigen Paste (Electrador™ ED500, Electra Polymers & Chemicals Ltd, UK) auf die zweite Oberfläche 2B des Elektrodenträgers 2 aufgebracht und anschliessend getrocknet. Im Bereich der Perforation 9 ist die leitfähige Paste durch die Perforation 9 hindurchgetreten. Mit dem Entfernen eines auf der ersten Oberfläche 2A des Elektrodenträgers 2 aufgebrachten perforierten Abdeckelement (Figur 3) wird die Paste im Bereich der ersten Oberfläche 2A gebrochen und eine Elektrodenoberfläche 4 entsteht. Diese Elektrodenoberfläche 4 ist unregelmässig ausgeformt und weist vorteilhafte Messeigenschaften auf.

Einen schematischen Abriss über das Herstellungsverfahren eines Elektroden-Elements 8 vermittelt die Figur 2. Im Teil i) ist ein Elektrodenträger 2 (ICI, 3M, 50 µm, Fa. Folex, CH) mit einer ersten Oberfläche 2A und einer zweiten Oberfläche 2B gezeigt. Auf die erste Oberfläche 2A wird das Abdeckelement 5 (Tesa 51408, 60 µm, Baiersdorf; oder 3M 5413 Kapton™ mit Silicon-Klebeschicht, 70 µm) aufgebracht. Mit einer Nadel 6 wird eine Perforation 9, wie sie in Teil ii) der Figur 2 dargestellt ist, erzeugt. Die Perforation 9 weist einen Durchmesser von ungefähr 0.2 mm auf. Auf das Abdeckelement 5 wird eine benetzbare und saugfähige Papierschicht 7 (z.B. gemäss DIN 19309) aufgebracht. Im nächsten Herstellungsschritt des Elektroden-Elements 8 (Teil iii)) wird die leitfähige, kohlenstoffhaltige Paste (Electrador™ ED500, Electra Polymers & Chemicals Ltd, UK) auf die zweite Oberfläche 2B des Elektrodenträgers 2 gedruckt und getrocknet bzw. ausgehärtet. Aufgrund des kleinen Durchmessers der Perforation 9 sowie der physikalischen Eigenschaften der Paste dringt diese in die Perforation ein, erreicht die Papierschicht und wird teilweise von dieser aufgesaugt. Mit der Trocknung bzw. Härtung ist das Elektroden-Element 8 fertiggestellt. Das Papier kann entfernt werden.

In Figur 3 ist der Bruchvorgang von einem Elektroden-Element zu einer Elektrode dargestellt. Das Abdeckelement 5 wird durch eine Aufwärts-Seitwärts-Bewegung von der ersten Oberfläche 2A des Elektrodenträgers 2 abgerissen. Derjenige Teil der leitfähigen Schicht 3, welcher sich in der Perforation 9 befindet wird beim Abreissen Zugkräften ausgesetzt und reisst unter Bildung der Elektrodenoberfläche 4 ein. In der Perforation 9 des Abdeckelements 5 verbleibt ein Rest der leitfähigen, getrockneten Paste mit einer zur Elektrodenoberfläche 4 annähernd komplementären Oberflächenstruktur.

Eine andere Ausführungsform der Elektrode 1 zeigt die Figur 4a in einer Querschnittsdarstellung. Der Elektrodenträger 2 weist die Form eines oben geschlossenen Kegelstumpfes mit einer Ausnehmung 19 auf. Die Ausnehmung 19 kann bereits beim Herstellen des Elektrodenträgers 2 geformt werden. In die Perforation 9 wird die leitfähige Zusammensetzung eingebracht und bildet die leitfähige Schicht 3. Die Elektrodenoberfläche 4 ist aufgrund des Bruchvorganges beim Entfernen eines Abdeckelements analog Figur 3 entstanden.

Die Vorstufe für die in Figur 4a gezeigte Elektrode 1 ist das Elektroden-Element 8 in Figur 4b. Das Abdeckelement 5 ist mit dem Elektrodenträger 2 zusammengefügt. Die leitfähige Schicht 3 erstreckt sich durch die Perforation 9 bis in die Ausnehmung 19 des Elektrodenträgers 2. Sowohl das Abdeckelement 5 wie auch der Elektrodenträger 2 weisen eine identisch dimensionierte und fluchtende Perforation 9 auf. Die auf dem Abdeckelement 5 befindliche leitfähige Schicht 3 wird mit dem Entfernen des Abdeckelement 5 gleichzeitig entfernt. Somit wird eine grössendefinierbare Elektrodenoberfläche sichergestellt.

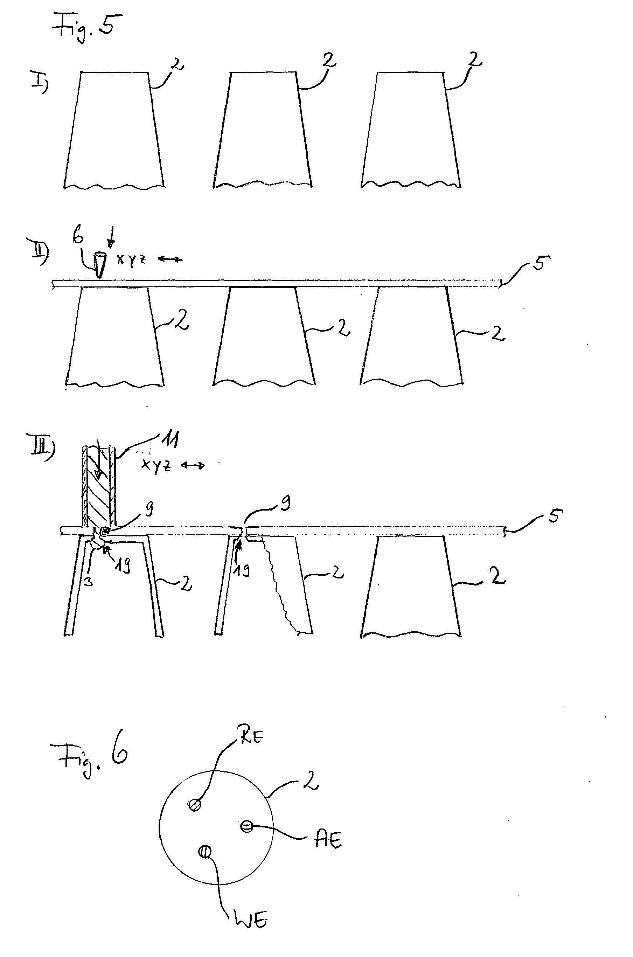

Ein schematisiertes Herstellverfahren für eine Elektrode 1, wie sie in der Figur 4a dargestellt ist, zeigt Figur 5. Mehrere kegelstumpfförmige Elektrodenträger 2 werden in einem ersten Schritt (I) rasterförmig angeordnet. Nach dem Aufbringen eines Abdeckelements 5 in Form einer Klebefolie erfolgt wie unter II) dargestellt ein Lochen der Elektrodenträger 2 unter xyz-Kontrolle der Perforationseinrichtung 6 (Nadel). Wegen der rasterförmigen Anordnung der Elektrodenträger 2 kann die Perforation prozessgünstig für eine Vielzahl von Elektrodenträgern 2 erfolgen. Unter III) ist das Auf- bzw. Einbringen der leitfähigen Zusammensetzung 3 mittels einer Druckeinrichtung 11 in die Perforation 9 und die Ausnehmung 19 dargestellt. Das Drucken erfolgt ebenfalls unter der xyz-Kontrolle der Druckeinrichtung 11. Auch hier ist aufgrund der Rasteranordnung der Elektrodenträger 2 das Drucken vorteilhaft und kostengünstig möglich.

Da wahlweise die Perforationseinrichtung 6 und die Druckeinrichtung 11 oder die Halteranordnung mit den Elektrodenträgern 2, in xyz-Richtung kontrolliert bewegbar sind, lassen sich pro Elektrodenträger mehrere Elektrodenflächen erzeugen. In der Figur 6 ist ein Elektrodenträger 2 mit den drei Elektrodenoberflächen RE (= Referenzelektrode), AE (= Hilfselektrode) und WE (= Arbeitselektrode) gezeigt. Für die Messung sind die Elektrodenoberflächen modifiziert.

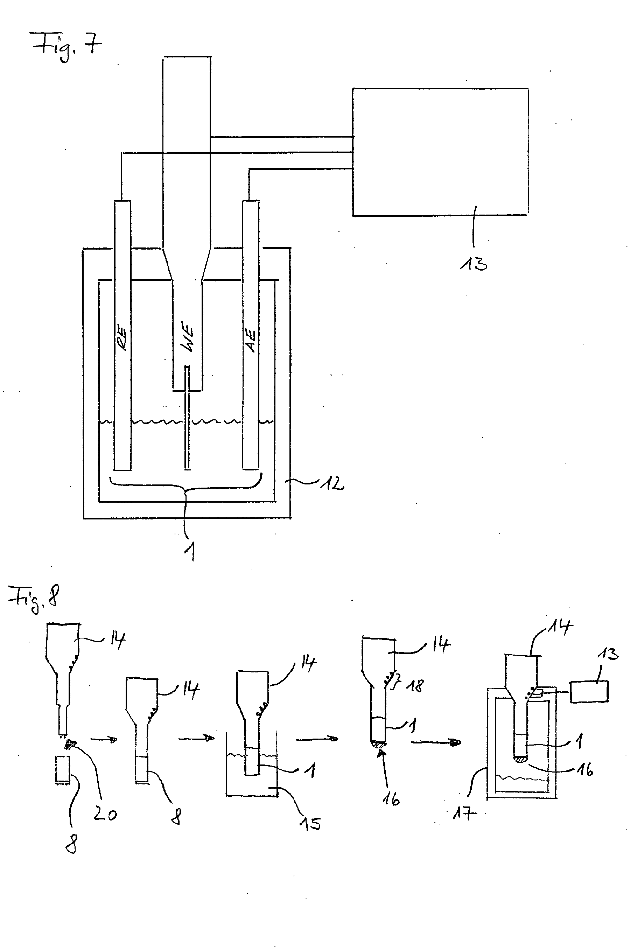

Figur 7 zeigt eine Messanordnung für eine erfindungsmässige Elektrode 1. Die Elektrode 1 ist in einen Probenbehälter 12 mit der zu analysierenden Probenflüssigkeit getaucht. Die Elektrode 1 beziehungsweise die Referenzelektrode RE, die Hilfselektrode AE und die Arbeitselektrode WE ist gleichzeitig mit dem Auswertegeräte 13 verbunden. Das Auswertegerät 13 liefert bei voltammetrischen Messungen auch die variierende Spannung für die Messung.

Die Vorgehensweise für eine Messung zeigt Figur 8 in schematischer Form. Ein Elektroden-Array 8 wird auf einen Halter 14 mit Kontakten 20 platziert. Die Elektrode 1 wird in die Probelösung 15 getaucht und anschliessend zusammen mit einer Probe 16 in die Messkammer 17 gebracht, wobei gleichzeitig die Anschlüsse 18, die mit den Kontakten 20 in leitend in Verbindung sind, mit den jeweiligen Gegenstücken an der Messkammer 17 verbunden werden. Die Messsignale der Elektrode 1 werden mit dem Auswertegeräte 13 ermittelt und ausgewertet.

## Patentansprüche

1. Elektrode (1) mit einem Elektrodenträger (2), mit einer leitfähigen Schicht (3) zur Bildung einer Elektrodenoberfläche (4), wobei die Schicht eine Zusammensetzung enthaltend leitfähige Partikel und Bindemittel aufweist, **dadurch gekennzeichnet, dass** die Elektrodenoberfläche (4) eine durch einen Bruchvorgang entstandene Oberflächenstruktur aufweist.

2. Elektrode (1) insbesondere nach Anspruch 1 mit einem Elektrodenträger (2), mit einer leitfähigen Schicht (3) zur Bildung einer Elektrodenoberfläche (4), wobei die Schicht eine Zusammensetzung enthaltend leitfähige Partikel und Bindemittel aufweist, **dadurch gekennzeichnet, dass** die Elektrodenoberfläche (4) durch Bindemittel und aus dem Bindemittel vorstehende leitfähige Partikel gebildet wird und eine Rauhigkeit von der Grösse der leitfähigen Partikel aufweist, und wobei die Partikel Mikroelektroden mit einer Partikelgrösse von 0.1 bis 10 µm bilden.

3. Elektrode (1) nach Anspruch 1 oder 2 umfassend einen Elektrodenträger (2) mit einer ersten Oberfläche (2A) und zweiten Oberfläche (2B), und zumindest eine auf der zweiten Oberfläche (2B) des Elektrodenträgers (2) zugänglichen, leitfähigen Schicht (3), **dadurch gekennzeichnet, dass** der Elektrodenträger (2) zumindest eine Perforation (9) aufweist, welche von der leitfähigen Schicht (3) durchdrungen wird.

4. Elektrode nach Anspruch 3, **dadurch gekennzeichnet, dass** die Elektrodenfläche (4) vom Elektrodenträger (2) umgeben ist.

5. Elektrode (1) nach Anspruch 1, **dadurch gekennzeichnet, dass** die durch den Bruch entstandene Elektrodenfläche (4) durch chemische und/oder physikalische Behandlung modifiziert ist.

6. Elektrode (1) nach einem der vorangehenden Ansprüche, **dadurch gekennzeichnet, dass** die leitfähige Schicht (3) Kohlenstoff und/oder Metalle, insbesondere Kohlenstoff-Partikel oder metallische Partikel enthält.

7. Elektrode (1) nach einem der vorangehenden Ansprüche, **dadurch gekennzeichnet, dass** die Dicke des Elektrodenträgers (2) zwischen 20 und 200 µm beträgt, bevorzugt zwischen 30 und 140 µm, und weiter bevorzugt zwischen 40 und 80 µm beträgt.

8. Elektroden-Element (8) zur Herstellung einer Elektrode (1) nach einem der vorangehenden Ansprüche, **dadurch gekennzeichnet, dass** auf dem Elektrodenträger (2) ein Abdeckelement (5) vorgesehen ist, das derart mit der leitfähigen Schicht (3) verbunden ist, dass beim Trennen von Elektrodenträger (2) und Abdeckelement (5) die leitfähige Schicht (3) gebrochen wird.

9. Elektroden-Element (8) zur Herstellung einer Elektrode (1) nach Anspruch 8, **dadurch gekennzeichnet, dass** eine fluchtende Perforation (9) von Elektrodenträger (2) und Abdeckelement (5) durch die leitfähige Schicht (3) gefüllt ist.

10. Elektroden-Element (8) nach einem der Ansprüche 8 oder 9, **dadurch gekennzeichnet, dass** das Abdeckelement (5) eine klebefähige Materialschicht (5) ist.

11. Elektroden-Element (8) nach einem der Ansprüche 8 bis 10, **dadurch gekennzeichnet, dass** das Abdeckelement (5) zusätzlich eine benetzbare Schicht (7) umfasst.

12. Elektroden-Element (8) nach einem der Ansprüche 8 bis 11, **dadurch gekennzeichnet, dass** die leitfähige Schicht (3) Kohlenstoff, insbesondere Kohlenstoff-Partikel oder Metall, insbesondere Metall-Partikel enthält.

13. Elektroden-Element (8) nach einem der Ansprüche 8 bis 12, **dadurch gekennzeichnet, dass** die Dicke des Elektrodenträger (2) zwischen 20 und 200 µm beträgt, bevorzugt zwischen 30 und 140 µm, und weiter bevorzugt zwischen 40 und 80 µm beträgt.

14. Elektroden-Element (8) nach einem der Ansprüche 8 bis 13, **dadurch gekennzeichnet, dass** die Perforation (9) einen Durchmesser zwischen 10 und 400 µm, bevorzugt zwischen 20 und 200 µm und weiter bevorzugt zwischen 40 und 100 µm aufweist.

15. Elektroden-Element (8) nach einem der Ansprüche 8 bis 14, **dadurch gekennzeichnet, dass** das Abdeckelement eine Dicke aufweist, die zwischen 20 und 200 µm beträgt, bevorzugt zwischen 30 und 140 µm, und weiter bevorzugt zwischen 40 und 80 µm beträgt.

16. Verfahren zur Herstellung eines Elektroden-Elements (8) umfassend die Schritte:
a) Bereitstellen eines Elektrodenträgers (2);
b) Bereitstellen eines Abdeckelements (5);
c) Zusammenfügen des Abdeckelements (5) und des Elektrodenträgers (2);
d) Perforieren des in Schritt c) erzeugten Laminats; und
e) Aufbringen einer leitfähigen Zusammensetzung, enthaltend ein Bindemittel und leitfähige Partikel, vorzugsweise einer Druckfarbe auf und/oder in die in Schritt d) erzeugte Perforation (9).

17. Verfahren zur Herstellung einer Elektrode (1) umfassend die Schritte:
a) Bereitstellen eines Elektrodenträgers (2);
b) Bereitstellen eines Abdeckelements (5);
c) Zusammenfügen des Abdeckelements (5) und des Elektrodenträgers (2);
d) Perforieren des in Schritt c) erzeugten Laminats;
e) Aufbringen einer leitfähigen Zusammensetzung, enthaltend ein Bindemittel und leitfähige Partikel, vorzugsweise einer Druckfarbe auf und/oder in die in Schritt d) erzeugte Perforation (9); und
f) Entfernen des aufgebrachten Abdeckelements (5)

18. Verfahren nach Anspruch 16 oder 17, wobei die in Schritt e) eingesetzten leitfähigen Partikel Kohlenstoff oder Metalle umfassen.

19. Verfahren nach einem der Ansprüche 16 bis 18, **dadurch gekennzeichnet, dass** das Abdeckelement (5) eine klebefähige Materialschicht umfasst.

20. Verfahren nach einem der Ansprüche 16 bis 19, **dadurch gekennzeichnet, dass** die Perforation (9) einen Durchmesser zwischen 10 und 400 µm, bevorzugt zwischen 20 und 200 µm und weiter bevorzugt zwischen 40 und 100 µm aufweist.

21. Verfahren nach einem der Ansprüche 16 bis 19, **dadurch gekennzeichnet, dass** die Dicke des Elektrodenträger (2) oder des Abdeckelements (5) zwischen 20 und 200 µm beträgt, bevorzugt zwischen 30 und 140 µm, und weiter bevorzugt zwischen 40 und 80 µm beträgt.

22. Verfahren nach einem der Ansprüche 16 bis 21, **dadurch gekennzeichnet, dass** die Perforation (9) mit einem Perforationsmittel (6), insbesondere mit einer Nadel oder einem Laser hergestellt wird.

23. Verfahren nach einem der Ansprüche 16 bis 22, **dadurch gekennzeichnet, dass** nach Schritt d) ein zweites Abdeckelement (7), vorzugsweise ein benetzbares Schichtmaterial auf das Abdeckelement (5) aufgebracht wird.

24. Verwendung einer Elektrode (1) gemäss einem der Ansprüche 1 bis 23 für voltammetrische Messungen.

25. Verfahren zur Herstellung einer Elektrode (1) mittels eines Elektrodenelements (8) gemäss einem der Ansprüche 8 bis 15, **dadurch gekennzeichnet, dass** das Abdeckelement (5) derart vom Elektrodenträger (2) getrennt wird, dass die leitfähige Schicht (3) unter Bildung einer frischen Elektrodenoberfläche (4) gebrochen wird.
